## Europäisches Patentamt

## European Patent Office

## Office européen des brevets

(11) Veröffentlichungsnummer: **0 038 968**
**A2**

(12) **EUROPÄISCHE PATENTANMELDUNG**

(21) Anmeldenummer: **81102672.3**

(22) Anmeldetag: **09.04.81**

(51) Int. Cl.³: **F 16 H 3/60**
**B 60 K 17/08**

(30) Priorität: **29.04.80 DE 3016485**

(43) Veröffentlichungstag der Anmeldung:
**04.11.81 Patentblatt 81/44**

(84) Benannte Vertragsstaaten:
**BE DE FR GB IT NL**

(71) Anmelder: **FORD-WERKE AKTIENGESELLSCHAFT**
**Ottoplatz 2 Postfach 210369**
**D-5000 Köln 21(DE)**

(84) Benannte Vertragsstaaten:
**BE DE IT NL**

(71) Anmelder: **FORD MOTOR COMPANY LIMITED**
**Eagle Way**
**Brentwood Essex CM13 3BW(GB)**

(84) Benannte Vertragsstaaten:
**GB**

(71) Anmelder: **FORD FRANCE SOCIETE ANONYME**
**344 Avenue Napoleon Bonaparte B.P. 307**
**F-92506 Rueil Malmaison Cedex(FR)**

(84) Benannte Vertragsstaaten:
**FR**

(72) Erfinder: **Svab, Eugen**
**Masurenstrasse 17**
**D-5000 Köln(DE)**

(74) Vertreter: **Ritzkowsky, Harald, Dipl.-Ing. et al,**
**Ford-Werke Aktiengesellschaft Patentabteilung Z´DRR-2**
**Ottoplatz 2**
**D-5000 Köln 21(DE)**

(54) Umkehrschaltgetriebe für ein stufenlos regelbares Zugorgangetriebe eines Kraftfahrzeuges.

㊗ Bei einem Umkehrschaltgetriebe für ein stufenlos regelbares Zugorgangetriebe eines Kraftfahrzeuges, das aus einem koaxial zur Antriebswelle (1) und der diese als Hohlwelle umfassenden Primärwelle (2) des Zugorgangetriebes angeordneten Planetenräderwechselgetriebe besteht, dessen Eingangselement (3) mit der Antriebwelle (1) und dessen Ausgangselement (6) mit der Primärwelle (2) verbunden ist und wobei zwei weitere Elemente zum Schalten eines Vorwärts – und eines Rückwärtsgangbereiches über eine Bremse bzw. über eine Kupplung festlegbar bzw. verbindbar sind und bei gelösten Einrichtungen ein Leerlauf bzw. Neutralbereich geschaltet ist, ist das Ringrad (7) mit einem außenliegenden Konusbremsteil (8) und einem innenliegenden Konuskupplungsteil (9) versehen, und ein mit dem Planetenradträger (3) treibend verbundener, axial verschiebbarer Konuskupplungsteil (10) über ein Axialrollenlager (11) von einem Vorwärtsgangkolben (12) bei Beaufschlagung mit Druckmittel entgegen der Kraft einer Rückstellfeder (13) axial verlagerbar und in Reibungseingriff mit dem innenliegenden Konuskupplungsteil (9) am Ringrad (7) bringbar und ein Rückwärtsgangkolben (14) ist mit einem im Gehäuse unverdrehbar geführten Konusbremsteil (15) verbunden und bei Beaufschlagung mit Druckmittel entgegen der Kraft einer Rückstellfeder (16) axial verlagerbar und in Reibungseingriff mit dem außenliegenden Konusbremsteil (8) am Ringrad (7) bringbar.

./...

FIG. 2

**Ford-Werke Aktiengesellschaft**
Verwaltung

Postanschrift:    Ford-Werke AG · Postfach 21 03 69 · 5000 Köln 21

Ottoplatz 2
Köln-Deutz
☎ (02 21) 8 25-1
Telex: 8 88 483
Telegramme: fordwerke koeln

**0038968**
Ford/D-308E/31. März 1981

| Ihre Zeichen | Ihre Nachricht | Telefon | Unsere Zeichen |
|---|---|---|---|
| | | (0221) 825- 5585 | Z/DRR-21 Sp pt |

Betreff

## Patentanmeldung

## Umkehrschaltgetriebe für ein stufenlos regelbares Zugorgangetriebe eines Kraftfahrzeuges

Die Erfindung geht von einem Stand der Technik aus, wie er aus der DE-AS 16 30 298, insbesondere deren Figur 2 zu entnehmen ist.

Bei diesem bekannten Umkehrschaltgetriebe erfordert das Planetenräderwechselgetriebe mit seinen zwei axial nebeneinander liegend angeordneten Planetenradsätzen einen erheblichen Einbauraum. Weiterhin sind für die vorgesehenen Bandbremsen an einer Stelle deren Umfanges entsprechende Servoeinrichtungen erforderlich, die insbesondere bei Antriebseinheiten bei denen ein quer zur Fahrzeuglängsachse angeordneter Verbrennungsmotor mit einem im wesentlichen horizontal angeordneten Zugorgangetriebe und einem darunter angeordneten Differentialgetriebe verbunden ist, schwierig anzuordnen sind.

Die Aufgabe der Erfindung ist es, ein Umkehrschaltgetriebe für ein stufenlos regelbares Zugorgangetriebe eines Kraftfahrzeuges zu schaffen, das nur einen minimalen Bauraum erfordert und aus möglichst einfachen

- 2 -

Bauteilen besteht, deren Herstellung und Montage kostengünstig ist.

Gemäß der Erfindung wird diese Aufgabe gelöst, indem ein Umkehrschaltgetriebe der im Oberbegriff erwähnten Art die im Kennzeichen des Patentanspruchs aufgezeigten Merkmale aufweist.

Dadurch, daß die zum Festlegen bzw. Verbinden erforderlichen Elemente als eine radial zum Ringrad angeordnete Konusbremse bzw. Konuskupplung ausgebildet sind, wird eine günstige, axial kurz bauende Anordnung erzielt, deren Einzelteile darüberhinaus einfach in der Herstellung und der Montage sind.

Die Erfindung wird anhand eines in den beiliegenden Zeichnungen gezeigten Ausführungsbeispieles näher erläutert. Es zeigt :

Fig. 1 ein schematisches Getriebeschaubild des Umkehrschaltgetriebes der Erfindung und

Fig. 2 eine konstruktive Ausführung des Umkehrschaltgetriebes nach Fig. 1.

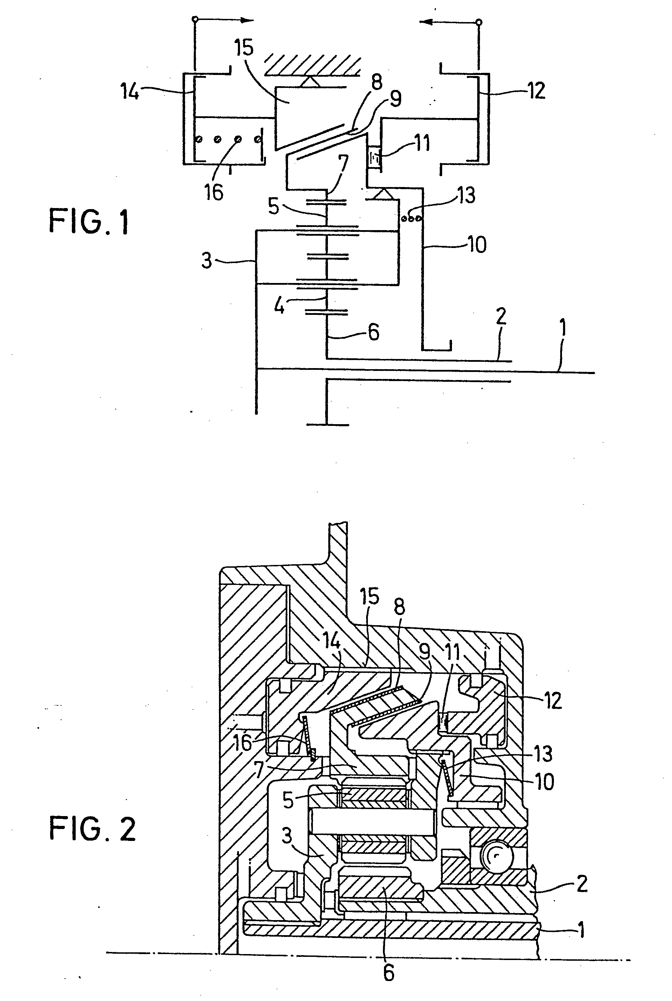

In dem in Fig. 1 gezeigten Getriebeschaubild ist mit 1 die Antriebswelle des Umkehrschaltgetriebes bezeichnet, die in herkömmlicher Weise, z. B. über eine hydraulische Kupplung, mit der Kurbelwelle eines Verbrennungsmotors verbunden sein kann. Mit 2 ist die Abtriebswelle des Umkehrschaltgetriebes bezeichnet, die in herkömmlicher Weise als Hohlwelle die Primärwelle eines Zugorgangetriebes bilden kann.

Mit der Antriebswelle 1 ist ein Planetenradträger 3 treibend verbunden, auf dem zwei miteinander im Eingriff stehende Planetenradsätze 4 und 5 angeordnet sind, von denen ein Satz 4 mit dem als Ausgangselement

- 3 -

vorgesehenen Sonnenrad 6 in Eingriff steht, das mit der Abtriebswelle 2 verbunden ist. Der andere Satz 5 steht in Eingriff mit einem Ringrad 7, das an seinem Umfang mit einem außenliegenden Konusbremsteil 8 und einem innenliegenden Konuskupplungsteil 9 versehen ist.

Ein mit dem Planetenradträger 3 treibend verbundener und axial verschiebbarer Konuskupplungsteil 1o kann über ein Axialrollenlager 11 von einem in einer Ringkammer im Gehäuse angeordneten Vorwärtsgangkolben 12 bei Beaufschlagung dessen Druckkammer verlagert und in Eingriff mit dem innenliegenden Konuskupplungsteil 9 des Ringrades 7 gebracht werden. Dadurch wird das Ringrad 7 mit dem Planetenradträger 3 verbunden und das auf diese Weise gesperrte Planetenrädergetriebe treibt die Abtriebswelle 2 mit einer Übersetzung von 1 : 1 in Vorwärtsrichtung an. Sobald die Ringkammer hinter dem Vorwärtsgangkolben 12 vom Druckmittel entlastet wird, wird der verschiebbare Konuskupplungsteil 10 über eine Rückstellfeder 13 außer Eingriff mit dem Konuskupplungsteil 9 gebracht.

In einer Ringkammer eines Deckelteiles ist ein Rückwärtsgangkolben 14 angeordnet, der in einem Stück mit einem im Gehäuse unverdrehbar geführten Konusbremsteil 15 besteht, das bei Beaufschlagung des Rückwärtsgangkolbens 14 in Eingriff mit dem außenliegenden Konusbremsteil 8 des Ringrades 7 gebracht wird. Hierdurch wird das Ringrad 7 am Gehäuse festgelegt und die Abtriebswelle 2 durch die Umkehrwirkung des Planetenrädersatzes nunmehr in Rückwärtsrichtung angetrieben. Sobald der Rückwärtsgangkolben 14 von Druckmittel entlastet wird, sorgt eine Rückstellfeder 16 dafür, daß der Konusbremsteil 15 wieder außer Eingriff mit dem Konusbremsteil 8 gelangt. Wie insbesondere aus Fig. 2 zu ersehen ist, besitzen die einzelnen Bauteile des erfindungsgemäßen Umkehrschaltgetriebes einen einfachen klaren Aufbau und sind in der gewählten Anordnung von der vom Deckelteil ab-

- 4 -

geschlossenen Seite her leicht in der Aufnehmung des Gehäuses zu montieren. Weiterhin sind die mit Druckmittel zu beaufschlagenden beiden Ringkolben, der Vorwärtsgangkolben und der Rückwärtsgangkolben in feststehenden Gehäuseteilen angeordnet, so daß die Zuführung des erforderlichen Druckmittels verhältnismässig einfach erfolgen kann. Die Anordnung der Konuskupplungsteile bzw. Konusbremsteile radial zum Ringrad ermöglicht eine minimale axiale Baulänge des gesamten Umkehrschaltgetriebes.

Patentanspruch

Umkehrschaltgetriebe für ein stufenlos regelbares Zugorgangetriebe
eines Kraftfahrzeuges, bestehend aus einem koaxial zur Antriebswelle
und der diese als Hohlwelle umfassenden Primärwelle des Zugorgangetriebes angeordneten Planetenräderwechselgetriebe, dessen Eingangselement mit der Antriebswelle und dessen Ausgangselement mit der
Primärwelle verbunden ist und wobei zwei weitere Elemente zum
Schalten eines Vorwärts- und eines Rückwärtsgangbereiches über
eine Bremse bzw. über eine Kupplung festlegbar bzw. verbindbar sind
und bei gelösten Einrichtungen ein Leerlauf bzw. Neutralbereich geschaltet ist, dadurch gekennzeichnet, daß bei einem als Eingangselement vorgesehenen Planetenradträger (3) mit zwei untereinander in Eingriff stehenden Planetenradsätzen (4 und 5), von denen
der eine (4) mit dem als Ausgangselement vorgesehenen Sonnenrad (6)
und der andere (5) mit dem als Reaktionselement vorgesehenen Ringrad (7) in Eingriff steht und wobei das Ringrad (7) mit einem außenliegenden Konusbremsteil (8) und einem innenliegenden Konuskupplungsteil (9)
versehen ist, und ein mit dem Planetenradträger (3) treibend verbundener, axial verschiebbarer Konuskupplungsteil (10) über ein Axialrollenlager (11) von einem Vorwärtsgangkolben (12) bei Beaufschlagung mit
Druckmittel entgegen der Kraft einer Rückstellfeder (13) axial verlagerbar und in Reibungseingriff mit dem innenliegenden Konuskupplungsteil
(9) am Ringrad (7) bringbar ist und ein Rückwärtsgangkolben (14) mit
einem im Gehäuse unverdrehbar geführten Konusbremsteil (15) verbunden ist und bei Beaufschlagung mit Druckmittel entgegen der Kraft einer
Rückstellfeder (16) axial verlagerbar und in Reibungseingriff mit dem
außenliegenden Konusbremsteil (8) am Ringrad (7) bringbar ist und bei
Entlastung beider Kolben (12 und 14) ein Neutralbereich geschaltet ist.

FIG.1

FIG.2